# EUROPEAN PATENT APPLICATION

(11) **EP 2 667 487 A1**
(43) Date of publication of application: **27.11.2013**
(21) Application number: 11856419.4
(22) Date of filing: 29.04.2011
(51) Int. Cl.: H02K 3/12, H02K 1/32

(54) **ROTOR FOR A SYNCHRONOUS NON-SALIENT-POLE ELECTRIC MACHINE**

(30) Priority: 20.01.2011 RU 2011102122
(71) Applicant: Zakrytoe Aktsionernoe Obshchestvo "Neft'stal'konstruktsiya", Moscow 115114 (RU)
(72) Inventor: SHALAEV, Vladimir Grigor'evich, St.Petersburg 197022 (RU)
(74) Representative: Spengler, Robert
(86) International application number: PCT/RU2011/000289
(87) International publication number: WO 2012/099486

(57) **Abstract**

Claimed invention refers to the electrical machine industry and is related to the design of rotor of a synchronous cylindrical rotor generator, in particular, the high-power turbine generator. The present invention is designed to increase the electrical machine unit capacity without changing of the rotor size.
Turbine generator rotor contains the winding consisting of coils 1. Each coil 1 consists of the conductors dropped in a single layer into all slots 2, attributed to the rotor polar pitch. The number of each coil 1 half-turns is equal to the number of polar pitch slots. Turns of coil 1 are concentric to the large tooth 3 axis. Each next coil 1 is mounted on the previous coil 1, and such coils form a single layer in all the slots 2. Coils' joint 2 is made by soldering with the intermediate conducting element 5. 1 depending claim, 3 figures.

## Description

### Field of invention

Claimed invention refers to the electrical machine industry and is related to the design of rotor of a synchronous cylindrical rotor generator, in particular, the high-power turbine generator.

### Prior art

The available prior art is the rotor of the cylindrical rotor machine [1] with winding, where the coils are arranged concentrically at the pole. Dropping in slots starts from the larger coil, and the teeth adjoining the coil are to be fastened to the rotor body. Then the smaller coils are to be mounted and fixed in the similar way as the first one. The coils are linked to each other, forming a false turn under the lower turn of the last coil.

Prototype of the claimed invention is the design of rotor of a synchronous cylindrical rotor machine - turbine generator [2], with coil winding arranged within the rotor body slots. Coil turns are stacked up and occupy two slots of a slot pitch. Coils are arranged concentrically to the large tooth axis and are interconnected, and the construction also includes a false turn.

The common drawback of the known design solutions is the fact that in high-power electrical machines cross section of a turn is rather large, and the presence of a false turn under the last coil lower turn results in the significant reduction of section of a ventilation duct between the rotor shaft and the coils bottom. It causes the degradation of the electrical machine rotor cooling because of the reduction of the cooling airflow coming to the rotor active parts. As a result, unit capacity of the electrical machine decreases. This is the most pressing problem of the air-cooled high-power electrical machine.

The present invention is designed to increase the electrical machine unit capacity without changing of the rotor size.

### Disclosure of the invention

The problem is solved due to the fact that the rotor of a synchronous cylindrical rotor machine, containing the winding made with a number of coils of electric conductors with turns wrapped on the pole and dropped into the slots; turns of each coil are concentric, dropped in a single layer in the slots at a polar pitch. Electric conductors are prolate in cross section and arranged by the larger side along the slot radial axis.

The prior art revealed no facts of arranging of each coil turns in a single layer within all the slots of any one particular polar pitch.

### Brief Description of the Drawings

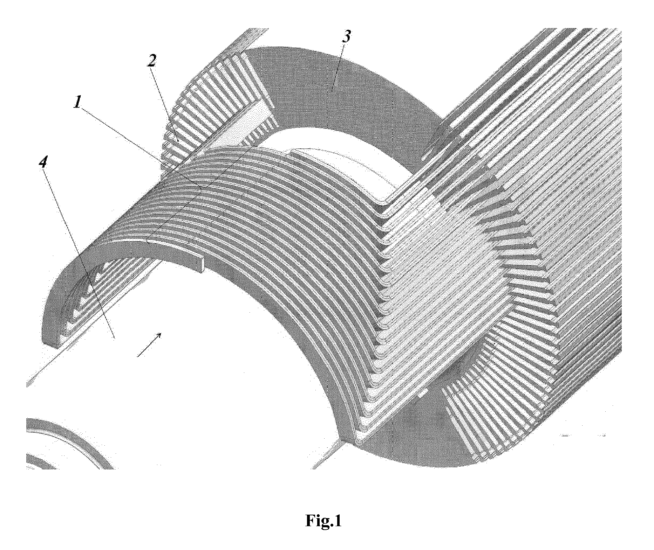

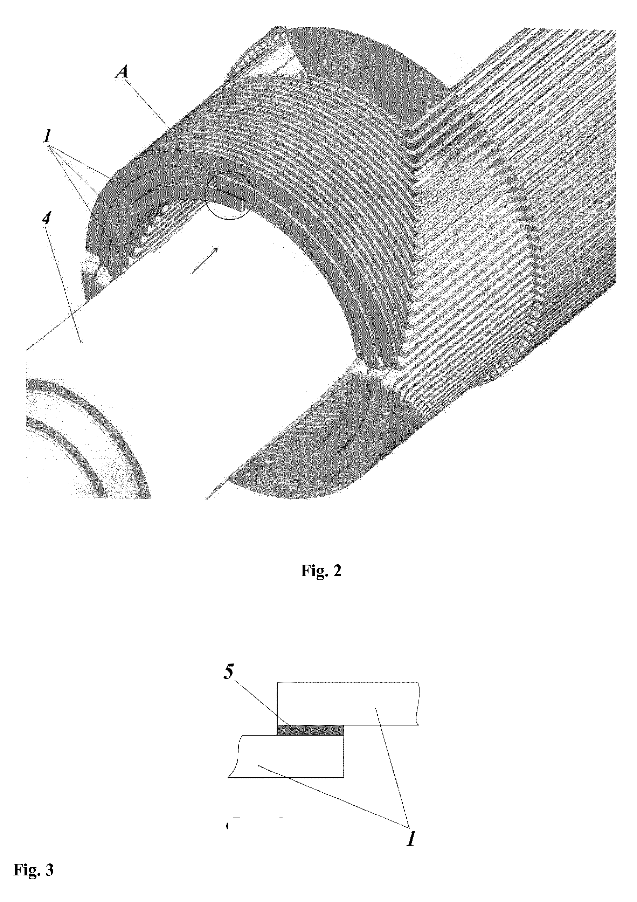

The claimed invention is illustrated by the drawings, where
Fig. 1 shows a fragment of a turbine generator rotor with the first coil of winding placed on the pole; Fig. 2 presents a fragment of the rotor with the following coils arranged; and Fig. 3 represents a fragment A of Fig. 2.

Rotor (see Fig. 1) of the turbine generator contains the winding consisting of coils 1. Each coil 1 consists of the conductors (electric conductors) dropped in a single layer into all slots 2, attributed to the rotor polar pitch. Conductor is oriented with its larger side along the slot radial axis. The number of each coil 1 half-turns is equal to the number of polar pitch slots. Coil 1 turns are concentric to the large tooth 3 axis. Each next coil 1 is mounted on the previous coil 1, and such coils form a single layer in all the slots 2 (see Fig. 2). Axial ventilation duct (is not marked at the drawing; the appropriate arrow shows the direction of the cooling airflow movement) is made between the rotor shaft 4 and the bottom of the first coil 1. Coils' joint 2 is made by soldering with the intermediate conducting element 5 (Fig. 3).

Absence of a false turn protruding to the axial ventilation duct facilitates more efficient ventilation of the electrical machine rotor, which is especially important for the high-power electrical machine.

Technical efficiency of the claimed invention consists in the opportunity to improve the electrical machine capacity without any increasing of its size.

Considered sources of information:
1. Patent RU2248658, applicant: Leningrad Electric Machine Building Plant, H02K15/09, H02K3/51, priority dated as of 22.08.2003, published on 20.03.2005.
2. Patent GB2470107, applicant: General Electric, H02K1/32, H02K9/00, priority dated as of 05.05.2009, published on 10.11.2010.

## Claims

1. Rotor of a synchronous cylindrical rotor machine within winding made with the coils of electric conductors, with turns covering the pole and dropped into the slots, **characterized in that** each coil's turns are concentric and arranged in a single layer in the slots related to the polar pitch.

2. Rotor of a synchronous cylindrical rotor machine, as presented in p. 1, **characterized in that** the electric conductors are prolate in cross section and oriented with their larger sides along the slot radial axis.
